Europäisches Patentamt

European Patent Office

Office européen des brevets

(11) Numéro de publication: **0 232 640**
A1

# (12) DEMANDE DE BREVET EUROPEEN

(21) Numéro de dépôt: 86402708.1

(22) Date de dépôt: 05.12.86

(51) Int. Cl.⁴: **B01D 46/10** , F02M 35/024

(30) Priorité: 17.12.85 FR 8518707

(43) Date de publication de la demande:
19.08.87 Bulletin 87/34

(84) Etats contractants désignés:
DE ES GB IT SE

(71) Demandeur: ACIERS ET OUTILLAGE PEUGEOT
Société dite:

F-25400 Audincourt (Doubs)(FR)

(72) Inventeur: Girardin, Alain Jean-Paul
"Aux Fournaux" Meslieres
F-25310 Herimoncourt(FR)

(74) Mandataire: Polus, Camille et al
c/o Cabinet Lavoix 2, Place d'Estienne
d'Orves
F-75441 Paris Cedex 09(FR)

(54) Cartouche filtrante d'air, notamment pour véhicule automobile.

(57) Cette cartouche filtrante comporte au moins deux couches de matériau filtrant (9,10), disposées l'une au-dessus de l'autre, et des moyens de fixation (6), à contour fermé, pour fixer ladite cartouche dans un boîtier de filtre. Les couches (9,10) sont fixées séparément, au voisinage de leur périphérie, sur les moyens de fixation (6) de la cartouche dans le boîtier. Selon un mode de réalisation, la seconde partie (8) des moyens de fixation présente une section générale rectangulaire, la périphérie (10a) de la couche supérieure (10) étant fixée sur la paroi latérale intérieure de la seconde partie des moyens de fixation et le rebord périphérique (9a) de la face de la couche inférieure (9), en regard de la couche supérieure (10), étant fixé sur la paroi d'extrémité de la seconde partie des moyens de fixation, opposée à la première partie (7) de ceux-ci.

FIG.2

## Cartouche filtrante d'air, notamment pour véhicule automobile.

La présente invention se rapporte à une cartouche filtrante d'air, notamment pour véhicule automobile, du type comportant au moins deux couches de matériau filtrant, disposées l'une au-dessus de l'autre, et des moyens de fixation, à contour fermé, pour fixer ladite cartouche dans un boîtier de filtre.

Les cartouches filtrantes de ce type, comportant par exemple une ou plusieurs couches de mousse de polyuréthanne à cellules ouvertes, permettent d'épurer l'air admis dans le moteur, en éliminant les poussières ntamment abrasives qu'il contient. Ces cartouches sont disposées dans des boîtiers de filtre et sont fixées dans ceux-ci par l'intermédiaire de moyens constituant à la fois des moyens de fixation de la cartouche dans le boîtier et des moyens d'étanchéité obligeant l'air à passer à travers les couches de matériau filtrant de la cartouche.

Ces moyens de fixation et d'étanchéité sont en général constitués par un joint à contour fermé, en polyuréthanne coulé sans pression ou à basse pression, par exemple de l'ordre de 4 Kg/cm2.

L'utilisation de ce joint en polyuréthanne, fait que l'adhérence entre ce joint et la couche de matériau filtrant sur laquelle il est fixé, est relativement bonne, notamment en raison de l'expansion du polyuréthanne lors de sa polymérisation.

Plus particulièrement, on connait des cartouches de ce type, dites "bigrades", constituées de deux couches de mousse de grades différents, fixées l'une sur l'autre par exemple en chauffant les faces en regard desdites couches par passage d'une flamme sur celles-ci (opération encore appelée flammage), par chauffage infrarouge ou tout autre procédé de chauffa ge localisé et rapide, lesdites couches étant ensuite appliquées l'une contre l'autre.

Il est à rappeler que le grade d'un filtre en mousse, est le nombre de pores comptés sur une longueur de 2,54 cm.

La couche de mousse, disposée du côté de l'entrée d'air, est constituée par une couche de matériau filtrant d'un grade plus faible que celui de la couche disposée du côté de la sortie d'air, de sorte que la couche disposée du côté de l'entrée d'air effectue une préfiltration en retenant les éléments de poussière les plus gros, et la couche de mousse disposée du côté de la sortie d'air effectuant la filtration proprement dite.

Ceci a pour effet de repousser la limite de colmatage et d'allonger la durée de vie des cartouches filtrantes, permettant ainsi de diminuer la fréquence de remplacement de ces cartouches, et donc le coût d'entretien du véhicule.

A titre d'exemple, on utilise dans certaines cartouches filtrantes, une couche de matériau filtrant de grade 45 du côté de l'entrée d'air et une couche de grade 60 du côté de la sortie d'air.

Cependant, ce type de cartouche filtrante présente un certain nombre d'inconvénients.

En effet, la fabrication d'une telle cartouche est relativement longue et peu commode, les faces en regard des couches de matériau filtrant, devant être chauffées puis appliquées l'une contre l'autre, pour assurer le montage de ladite cartouche.

Par ailleurs, il peut se créer, dans certains cas, au niveau de la fixation des deux couches de mousse l'une sur l'autre, un certain nombre d'obstacles à l'écoulement de l'air, ces obstacles étant constitués par exemple par des pores bouchés, etc.

Le but de l'invention est de résoudre les problèmes évoqués ci-dessus.

A cet effet, l'invention a pour objet une cartouche filtrante d'air, du type défini précédemment, caractérisée en ce que lesdites couches sont fixées séparément, au voisinage de leur périphérie, sur les moyens de fixation de la cartouche dans le boîtier.

L'invention sera mieux comprise à l'aide de la description qui va suivre, donnée uniquement à titre d'exemple et faite en se référant aux dessins annexés, sur lesquels :

-la Fig.1 représente une vue partielle en coupe d'une cartouche filtrante dite "bigrade", de l'état de la technique, en position dans un boîtier de filtre;

-la Fig.2 représente un premier mode de réalisation de la cartouche selon l'invention; et

-la Fig.3 représente un second mode de réalisation de la cartouche selon l'invention.

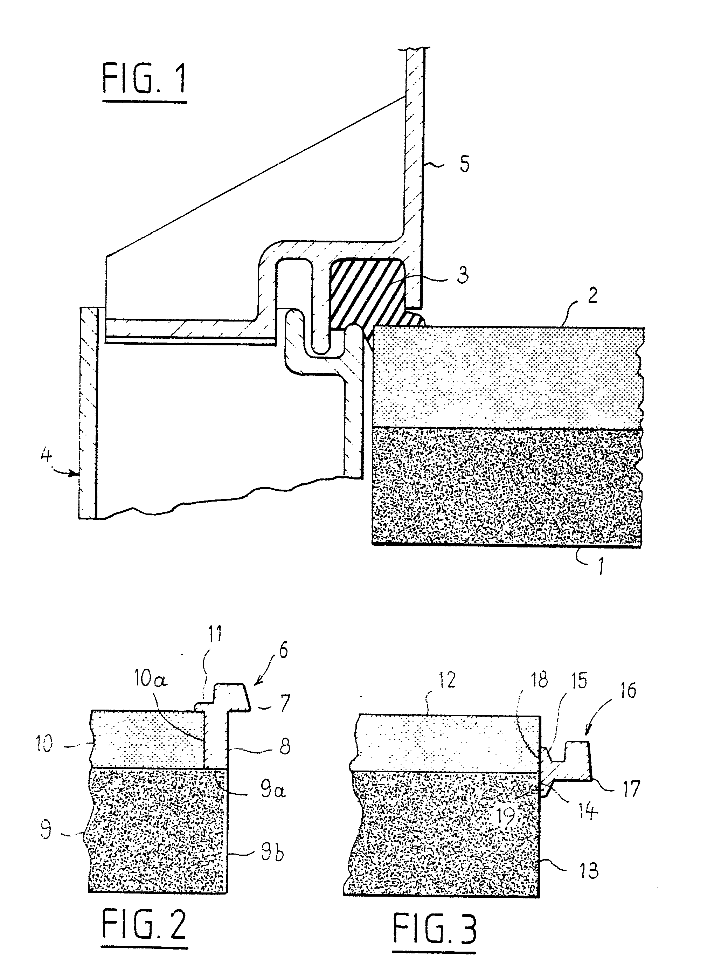

Comme on peut le voir sur la Fig.1, une cartouche filtrante de l'état de la technique comporte une première couche 1 de matériau filtrant, tel que par exemple de la mousse de polyuréthanne, fixée par exemple par flammage sur une seconde couche 2 de matériau filtrant. Sur cette couche 2 de matériau filtrant sont fixés des moyens 3 permettant de fixer ladite cartouche filtrante constituée par les couches 1 et 2, dans un boîtier de filtre 4 comportant un couvercle 5. Ces moyens de fixation 3, à contour fermé, assurent également l'étanchéité. entre les différents composants de ce filtre, pour obliger l'air à passer à travers la cartouche filtrante.

Ainsi qu'il a été mentionné précédemment, ce type de cartouche présente un certain nombre d'inconvénients.

Si l'on se reporte maintenant à la Fig.2 qui représente un premier mode de réalisation d'une cartouche filtrante selon l'invention, on voit que les moyens de fixation à contour fermé 6, de la cartouche dans le boîtier, comporte une première partie 7 coopérant avec le boîtier de filtre, pour fixer ladite cartouche dans celui-ci. Ces moyens de fixation comportent également une seconde partie 8 sur laquelle sont fixées séparément des couches 9 et 10 de matériau filtrant. Cette seconde partie 8 des moyens de fixation, présente une section générale rectangulaire, la périphérie 10a de la couche supérieure 10 de matériau filtrant, étant fixée sur la paroi latérale intérieure de la seconde partie des moyens de fixation et le rebord périphérique 9a de la face de la couche inférieure 9, en regard de la couche supérieure, étant fixé sur la paroi d'extrémité de la seconde partie 8 des moyens de fixation 6, opposée à la première partie 7 de ceux-ci.

Les couches 9 et 10 de matériau filtrant sont donc fixées séparément, au voisinage de leur périphérie, sur les moyens de fixation de la cartouche dans le boîtier.

Par ailleurs,les dimensions de la couche supérieure 10 sont inférieures à celles de la couche inférieure 9, de sorte que la paroi latérale extérieure de la seconde partie 8 des moyens de fixation est dans le prolongement de la périphérie 9b de la couche inférieure 9 de matériau filtrant.

Il est également à noter que la paroi latérale intérieure de cette seconde partie 8 des moyens de fixation comporte une partie en saillie 11 formant bord d'arrêt de la couche supérieure 10.

Dans le second mode de réalisation de la présente invention représenté sur la Fig.3, des couches 12 et 13 de matériau filtrant ont la même section et sont fixées, par exemple symétriquement, sur la paroi latérale intérieure 14 d'une seconde partie 15 de moyens de fixation 16 à contour fermé. Ces moyens de fixation comportent également une première partie 17 destinée à coopérer avec le boîtier et le couvercle de celui-ci, pour fixer la cartouche filtrante dans le boîtier.

Avantageusement, la seconde partie 15 des moyens de fixation présente deux lèvres 18,19 sur lesquelles est fixée au moins une partie des périphéries des couches 12 et 13 de matériau filtrant.

Il est à noter que la fabrication et le montage des différents éléments constituant la cartouche selon l'invention, sont réalisés de manière connue en soi.

Par ailleurs, la cartouche filtrante décrite en regard de la Fig.2, peut se monter en lieu et place d'une cartouche filtrante de l'état de la technique, tandis que celle représentée sur la Fig.3 nécessite une adaptation du boîtier et de son couvercle pour permettre le montage de cette cartouche.

## Revendications

1. Cartouche filtrante d'air notamment pour véhicule automobile, du type comportant au moins deux couches de matériau filtrant (9,10;12,13) disposées l'une au-dessus de l'autre, et des moyens de fixation (6;16), à contour fermé, pour fixer ladite cartouche dans un boîtier (4) de filtre, caractérisée en ce que lesdites couches (9,10;12,13) sont fixées séparément, au voisinage de leur périphérie, sur les moyens de fixation (6;16) de la cartouche dans le boîtier.

2. Cartouche filtrante selon la revendication 1, dans laquelle les moyens de fixation comportent une première partie (7;17) coopérant avec le boîtier de filtre pour fixer ladite cartouche dans celui-ci, caractérisée en ce que les moyens de fixation comportent en outre, une seconde partie (8;15) sur laquelle sont fixées lesdites couches de matériau filtrant.

3. Cartouche filtrante selon la revendication 2, caractérisée en ce que la seconde partie (8) présente une section générale rectangulaire, la périphérie (10a) de la couche supérieure (10) étant fixée sur la paroi latérale intérieure de la seconde partie des moyens de fixation, et le rebord périphérique (9a) de la face de la couche inférieure (9), en regard de la couche supérieure (10), étant fixé sur la paroi d'extrémité de la seconde partie - (8) des moyens de fixation, opposée à la première partie (7) de ceux-ci.

4. Cartouche filtrante selon la revendication 3, caractérisée en ce que les dimensions de la couche supérieure (10) sont inférieures à celles de la couche inférieure (9) de sorte que la paroi latérale extérieure de la seconde partie (8) des moyens de fixation est dans le prolongement de la périphérie - (9b) de la couche inférieure (9).

5. Cartouche filtrante selon la revendication 3 ou 4, caractérisée en ce que la paroi latérale intérieure de la seconde partie (8) des moyens de fixation, comporte une partie en saillie (11) formant bord d'arrêt de la couche supérieure (10).

6. Cartouche filtrante selon la revendication 1 ou 2, caractérisée en ce que les couches (12, 13) ont la même section et sont fixées sur la paroi latérale intérieure (14) de la seconde partie (15) des moyens de fixation (16).

7. Cartouche filtrante selon la revendication 6, caractérisée en ce que la seconde partie (15) des moyens de fixation présente deux lèvres (18,19) sur lesquelles est fixée au moins une partie des périphéries des couches (12,13) de matériau filtrant.

## FIG. 1

5

3

2

4

1

## FIG. 2

11

6

10a

7

10

8

9a

9

9b

## FIG. 3

12

18

15

16

17

14

19

13

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 563 828  (D.A.G. MARSHALL) <br><br> ----- | | B 01 D   46/10 <br> F 02 M   35/024 |

DOMAINES TECHNIQUES
RECHERCHES (Int. Cl.4)

B 01 D   46/00
F 02 M   35/00

Le présent rapport de recherche a été établi pour toutes les revendications

| Lieu de la recherche | Date d'achèvement de la recherche | Examinateur |
|---|---|---|
| LA HAYE | 30-03-1987 | BOGAERTS M.L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82